# EUROPÄISCHE PATENTANMELDUNG

(11) **EP 1 944 204 A2**
(43) Veröffentlichungstag der Anmeldung: **16.07.2008**
(21) Anmeldenummer: 08150234.6
(22) Anmeldetag: 14.01.2008
(51) Int. Cl.: B60R 21/34

(54) **Aufprallschutzvorrichtung**

(30) Priorität: 15.01.2007 DE 102007002125
(71) Anmelder: Euromotive GmbH & Co. KG, 5651 Lend (AT)
(72) Erfinder: Garnweidner, Peter, 5112 Lamprechtshausen (AT); Lindhuber, Georg, 4952 Weng (AT)
(74) Vertreter: Wilhelms · Kilian & Partner Patentanwälte

(57) **Zusammenfassung**

Aufprallschutzvorrichtung für die Frontseite eines Kraftfahrzeuges, an der eine Fronthaube vorgesehen ist, die an der Rückseite über wenigstens ein Scharnier und an der Vorderseite über ein Schloss mit der Karosserie des Kraftfahrzeuges verbunden ist. Das Scharnier umfasst einen frontseitigen und einen karosserieseitigen Scharnierteil (10, 11). Es ist eine Einrichtung vorgesehen, die einen Aufprall eines Körpers auf die Frontseite des Kraftfahrzeuges wahrnimmt. Eine Federeinrichtung (13) spannt die Rückseite der Fronthaube in Richtung auf eine Stellung vor, in der diese gegenüber den benachbarten Teilen der Karosserie angehoben ist. Eine Arretiereinrichtung (17) arretiert die Federeinrichtung (13) im vorgespannten Zustand und wird durch die Einrichtung ausgelöst, die einen Aufprall wahrnimmt. Die Fronthaube ist an ihrem Schloss schwenkbar angebracht und wenigstens eines der Scharnierteile (11) ist an seinem freien Ende schwenkbar angeordnet. Die Federeinrichtung (13) sitzt zwischen den Scharnierteilen (10, 11) insbesondere auf der Achse (12) des Scharniers und greift an den Scharnierteilen (11, 10) so an, dass sie bei einer normalen Öffnung der Fronthaube durch Öffnen des Schlosses und Schwenken der Fronthaube um die Scharnierachse die Öffnungsbewegung unterstützt, während sie beim Auslösen der Arretiereinrichtung (17) dafür sorgt, dass die Scharnierteile (10, 11) gespreizt werden und dadurch die Rückseite der Fronthaube angehoben wird.

## Beschreibung

Die Erfindung betrifft eine Aufprallschutzvorrichtung für die Frontseite eines Kraftfahrzeuges nach dem Gattungsbegriff des Patentanspruchs 1.

Eine Aufprallschutzvorrichtung dient dazu, bei einem Aufprall eines Körpers auf die Frontseite eines Kraftfahrzeuges, insbesondere beim Aufprall des Kopfes eines angefahrenen Fußgängers, die dabei verursachten Verletzungen zu mindern.

Grundsätzlich werden dabei Aufprallschutzvorrichtungen vom passiven und vom aktiven Typ unterschieden.

Bei passiven Vorrichtungen wird die Frontseite des Kraftfahrzeuges bis zur Frontscheibe so weich, d. h. verformbar gestaltet, dass der Aufprall nicht zu schwersten Verletzungen führt.

Bei aktiven Vorrichtungen sind Einrichtungen vorgesehen, die dann, wenn ein Aufprall wahrgenommen wird, die Frontseite des Kraftfahrzeuges so verändern, dass die Folgen des Aufpralls weniger ernst sind. Das Wahrnehmen des Aufpralls erfolgt üblicherweise durch Sensoren, die am Stoßfänger angeordnet sind und in Abhängigkeit von der Art des Aufpralls, der Größe des aufprallenden Körpers, des anliegenden Impulses usw. ggf. über zwischengeschaltete Recheneinheiten aktive Einrichtungen auslösen, die für die Veränderung der Frontseite sorgen.

Derartige aktive Aufprallschutzvorrichtungen werden in der Regel bei Kraftfahrzeugen mit großen Maschinen benötigt, da bei diesen Kraftfahrzeugen die Maschine bis knapp unter die Fronthaube reicht und daher nur ein geringer Verformungsweg zur Verfügung steht.

Bei bekannten Aufpraiischutzvorrichtungen der aktiven Art erfolgt die Veränderung der Frontseite in der Regel dadurch, dass die Fronthaube im Bereich ihrer an der Rückseite angeordneten Scharniere um etwa 80 bis 120 mm angehoben wird.

Die bekannten aktiven Aufprallschutzvorrichtungen sind dazu mit Wirkmechanismen, Auslösungseinrichtungen und Anhebemechanismen versehen, die zusätzlich zu den Scharniereinrichtungen zum Öffnen und Schließen der Fronthaube und ausschließlich für den Unfall vorgesehen sind.

Neben Federeinrichtungen sind pyrotechnische Systeme, Gasfedern und Elektromotoren als Einrichtungen zum Anheben der Rückseite der Fronthaube bekannt.

Vorrichtungen mit pyrotechnischen Systemen sind allerdings insofern nachteilig, als bei einer Auslösung zwangsweise eine Fachwerkstätte aufgesucht werden muss, da die ausgelöste Treibladung ersetzt werden muss. Es sind daher Entwicklungen bekannt, bei denen bis zu drei Treibladungen vorgesehen sind, so dass erst bei der Zündung der dritten Treibladung die Werkstatt aufgesucht werden muss. Das allerdings ist mit erheblichen Kosten verbunden.

Der Nachteil von Aufprallschutzvorrichtungen mit Federsystemen besteht darin, dass bei einer Fehlauslösung der Fahrer des Kraftfahrzeuges die Fronhaube gegen die Federkraft drückend wieder schließen muss. Bei den erforderlichen Öffnungskräften von ca. 1000 N ist das sehr schwierig und in vielen Fällen personenabhängig nicht möglich.

Erschwerend kommt hinzu, dass davon ausgegangen werden muss, dass die Einrichtung, die einen Aufprall eines Körpers auf die Frontseite des Kraftfahrzeuges wahrnimmt, den Aufprall einer Person nicht ohne Weiteres erkennt und von dem Aufprall eines Gegenstandes unterscheidet, so dass die Aufprallschutzvorrichtung im Zweifelsfalle immer, d. h. auch dann aktiviert wird, wenn beispielsweise eine Mülltonne angefahren wird. In jedem Fall muss dann entweder die Treibladung ausgetauscht werden oder muss die Fronthaube von Hand wieder geschlossen werden, was mit den oben beschriebenen Schwierigkeiten verbunden ist.

Da weiterhin die Einrichtungen, die für das Anheben der Fronthaube sorgen sollen, separat für den Unfall vorgesehen sind, muss dann, wenn das normale Öffnen der Fronthaube unterstützt werden soll, eine zusätzliche Federeinrichtung, beispielsweise eine Gasfeder eingebaut werden, damit die Fronthaube leichter geöffnet werden kann. Das ist ersichtlich mit weiteren Kosten verbunden.

Nachteilig bei den bekannten Aufprallschutzvorrichtungen ist es weiterhin, dass diese einen erheblichen Bauraum in Anspruch nehmen.

Die der Erfindung zugrunde liegende Aufgabe besteht daher darin, eine Aufprallschutzvorrichtung der eingangs genannten Art zu schaffen, die mit geringen Kosten verbunden ist und einen geringen Bauraum einnimmt.

Diese Aufgabe wird durch die Aufprallschutzvorrichtung nach dem Patentanspruch 1 gelöst.

Die bei der erfindungsgemäßen Aufprallschutzvorrichtung vorgesehene Federeinrichtung, die zwischen den Scharnierteilen angeordnet ist, hat eine Doppelfunktion, insofern als sie einerseits beim normalen Öffnen der Fronklappe durch Schwenken um das Scharnier die Öffnungsbewegung unterstützt, so dass zusätzlicher Gasfedern zu diesem Zweck nicht benötigt werden, und andererseits bei einem Unfall dafür sorgt, dass die Rückseite der Fronthaube in der gewünschten Weise gegenüber den benachbarten Teilen der Karosserie angehoben wird.

Dadurch, dass auf zusätzliche Gasfedern verzichtet werden kann, ergibt sich eine Kostenreduzierung und eine Gewichtsersparnis.

Da darüber hinaus der Kraftaufwand beim Zurückstellen der Fronthaube nicht größer als beim Schließen der Fronthaube in ihrer Normalfunktion ist, und die Vorrichtung daher immer wieder verwandt werden kann, kann eine weniger sensible Einrichtung vorgesehen sein, die den Aufprall eines Körpers auf die Frontseite des Kraftfahrzeuges wahrnimmt. Die Ausgestaltung kann derart sein, dass die Arretiereinrichtung nahezu immer ausgelöst wird, wenn ein Aufprall eines Körpers festgestellt wird, gleichgültig ob es sich dabei um einen Personenunfall handelt oder nicht. Die Vorrichtung ist daher außerordentlich funktionssicher.

Aufgrund der obigen baulichen Gestaltung benötigt sie darüber hinaus nur einen geringen Bauraum.

Besonders bevorzugte Ausgestaltungen und Weiterbildungen der erfindungsgemäßen Aufprallschutzvorrichtung sind Gegenstand der Patentansprüche 2 bis 6.

Im Folgenden werden anhand der zugehörigen Zeichnungen besonders bevorzugte Ausführungsbeispiele der Erfindung näher beschrieben. Es zeigen
Fig. 1 eine perspektivische auseinandergezogene Ansicht eines Aufprallschutzscharniers für ein erstes Ausführungsbeispiel der erfindungsgemäßen Aufprallschutzvorrichtung,

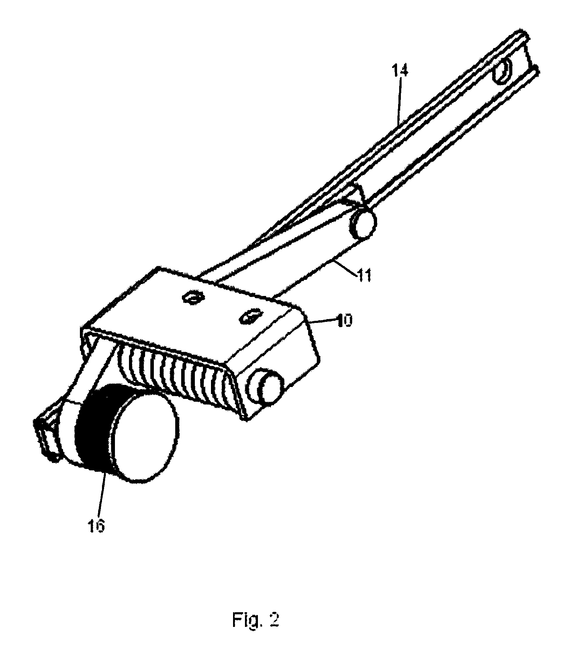

Fig. 2 eine perspektivische Ansicht des in Fig. 1 dargestellten Aufprallschutzscharniers im zusammengesetzten Zustand,
Fig. 3 eine Schnittansicht durch das Scharniergelenk des in Fig. 1 dargestellten Aufprallschutzscharniers,
Fig. 4 eine Schnittansicht durch den Auslösemechanismus des in Fig. 1 dargestellten Aufprallschutzscharniers,
Fig. 5 eine Seitenansicht des in Fig. 1 dargestellten Aufprallschutzscharniers bei geöffneter Fronthaube,
Fig. 6 eine Seitenansicht des in Fig. 1 dargestellten Aufprallschutzscharniers bei angehobener Rückseite der Fronthaube,
Fig. 7 ein Aufprallschutzscharnier vom mehrgelenkigen Typ für ein zweites Ausführungsbeispiel der erfindungsgemäßen Aufprallschutzvorrichtung bei angehobener Rückseite der Fronthaube und
Fig. 8 eine Fig. 7 entsprechende Ansicht bei abgesenkter Fronthaube.

Die erfindungsgemäße Aufprallschutzvorrichtung ist für die Frontseite eines Kraftfahrzeuges vorgesehen, an der sich eine Fronthaube befindet, die an ihrer Rückseite über wenigstens ein Scharnier und an ihrer Vorderseite über ein Schloss mit der Karosserie des Kraftfahrzeuges verbunden ist.

Die Fronthaube ist an ihrem Schloss schwenkbar ausgebildet und mit einer Federeinrichtung versehen, die die Rückseite der Frontseite in Richtung auf eine gegenüber den benachbarten Teilen der Karosserie abgehobene Stellung vorspannt.

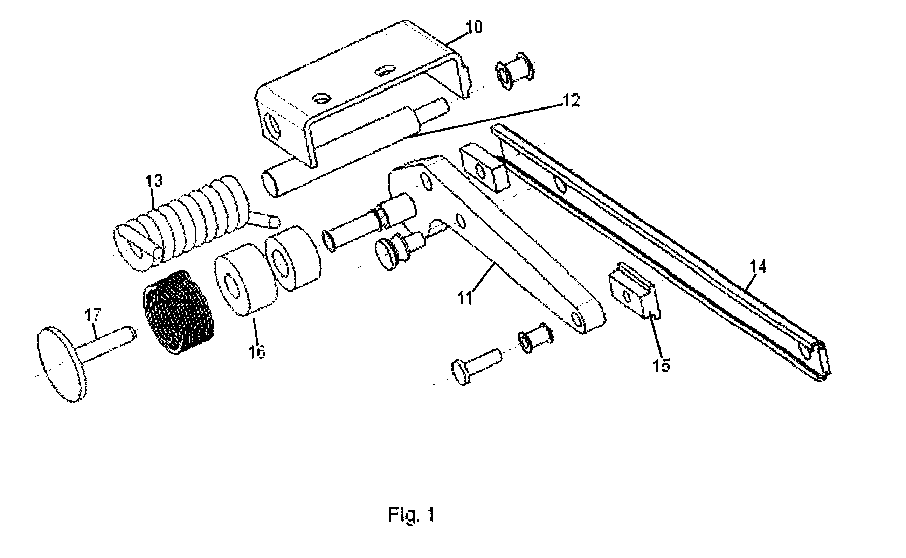

Wie es in Fig. 1 dargestellt ist, umfasst das Scharnier ein fronthaubenseitiges Scharnierteil 10 und ein karosserieseitiges Scharnierteil 11. Das fronthaubenseitige Scharnierteil 10 ist an der Rückseite der Fronthaube befestigt und das karosserieseitige Scharnierteil 11 ist schwenkbar und über ein Gleitstück 15 in einer Schiene 14 in Längsrichtung des Kraftfahrzeuges verschiebbar an der Karosserie angebracht. Die Schiene 14 ist fest mit der Karosserie verbunden.

Die beiden Scharnierteile 10 und 11 sind über eine Scharnierachse 12 miteinander verbunden, um die die Fronthaube beim Öffnen des Schlosses geöffnet und geschlossen werden kann.

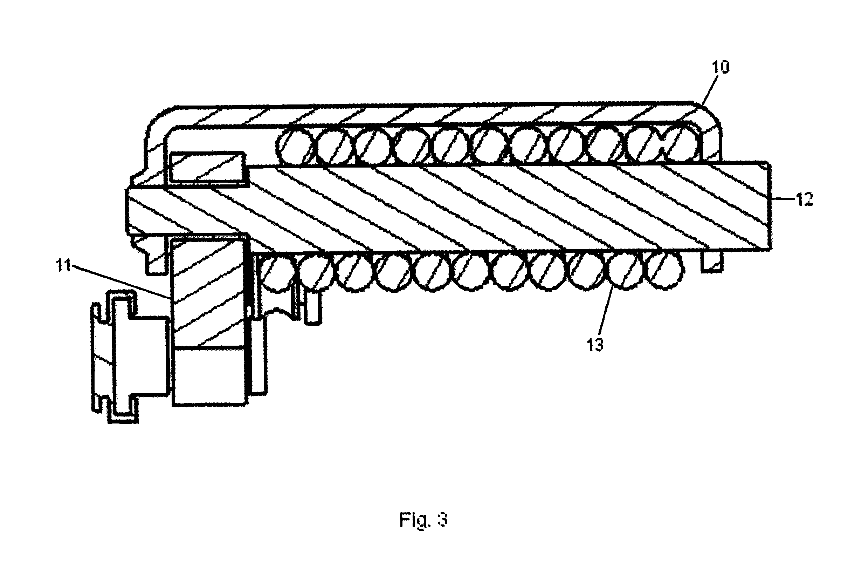

Eine Feder 13 ist zwischen den beiden Scharnierteilen 10 und 11 in der in Fig. 1 dargestellten Weise auf der Scharnierachse 12 so angebracht, dass sie die Rückseite der Fronthaube in Richtung auf die angehobene Stellung vorspannt. Hierzu sitzt die Feder 13 mit ihren Enden in Anlage einerseits an dem fronthaubenseitigen Scharnierteil 10 und andererseits am karosserieseitigen Scharnierteil 11 beispielsweise an einem daran vorgesehenen Stift, wie es in Fig. 3 dargestellt ist.

Es ist eine Arretiereinrichtung vorgesehen, die in Form eines Arretierstiftes 17 ausgebildet sein kann und das scharnierachsenseitige Ende des karosserieseitigen Scharnierteils 11 an der Schiene 14 festlegt.

Es ist eine Auslöseeinrichtung 16 vorgesehen, die die Arretiereinrichtung in Form eines Stiftes 17 vom karosserieseitigen Scharnierteil 11 löst, so dass die Feder 13 die beiden Scharnierteile 10 und 11 gegeneinander um die Scharnierachse 12 spreizen kann.

Eine nicht dargestellte Sensoreinrichtung ist an der Frontseite des Kraftfahrzeuges vorgesehen und nimmt den Aufprall eines Körpers insbesondere einer Person auf die Frontseite des Kraftfahrzeuges wahr. Das daraufhin von der Sensoreinrichtung abgegebene Ausgangssignal aktiviert die Auslöseeinrichtung 16. Daraufhin wird der Arretierstift 17 zurückgezogen und daher das Scharnier freigegeben.

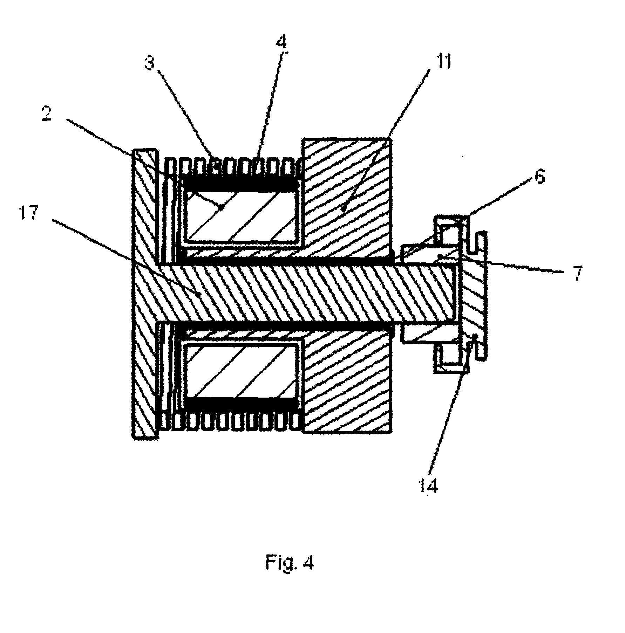

In Fig. 4 ist ein bevorzugtes Ausführungsbeispiel der Auslöseeinrichtung 16 dargestellt.

Ein axial verschiebbarer Ankerbolzen dient als Verriegelungsstift 17 und sitzt in einem Permanentmagneten 2, um den eine Induktionsspule 4 angeordnet ist. Der Ankerbolzen sitzt im verriegelten Zustand im karosserieseitigen Scharnierteil 11 sowie in einer Halteplatte 7 für den Ankerbolzen, die ihrerseits in der Gleitschiene 14 angeordnet ist. Eine Rückstellfeder 3 dient zum Rückziehen des Ankerbolzens.

Die Rückstellfeder 3 beaufschlagt den Ankerbolzen in die Richtung, in der dieser aus der Halteplatte 7 herausgezogen wird. In der Normalstellung hält allerdings der Permanentmagnet 2 den Ankerbolzen in der Halteplatte 7 gegen die Federkraft der Rückstellfeder 3.

Im Normalbetrieb, d. h. wenn kein Aufprall vorliegt, ist der Ankerbolzen durch den Permanentmagneten 2 in der Halteplatte 7 gehalten und ist daher das karosserieseitige Scharnierteil 11 arretiert. Diese Funktion kann im Fahrbetrieb noch dadurch verstärkt werden, dass eine Spannung entsprechender Polarität an die Induktionsspule 4 gelegt wird. Der Permanentmagnet 2 wirkt dann noch stärker gegen die Federkraft der Rückstellfeder 3.

Wenn der Sensor einen Aufprall eines Körpers auf die Frontseite des Kraftfahrzeuges wahrnimmt, spricht die in Fig. 4 dargestellte Auslöseeinrichtung so an, dass eine derartige Spannung an die Induktionsspule 4 gelegt wird, dass die Kraft des Permanentmagneten 2 kurzzeitig aufgehoben wird. Die Rückstellfeder 3 kann dann den Ankerbolzen aus der Halteplatte 7 ziehen, wodurch das Scharnier entriegelt oder entarretiert wird.

Bei einer Rückstellung muss lediglich der Ankerbolzen gegen die Federkraft der Rückstellfeder 3 wieder in den Permanentmagneten 2 und in die Halteplatte 7 gedrückt werden.

Die obige Aufprallschutzvorrichtung arbeitet in der folgenden Weise:
Beim normalen Öffnen der Fronthaube wird das Schloss geöffnet und erfolgt das Aufklappen der Fronthaube durch die Muskelkraft der Bedienungsperson oder selbstständig, wobei diese Öffnungsbewegung durch die Feder 13 unterstützt wird.

Hierbei können Kerben oder Erhöhungen auf der Berührungslinie der Feder 13 mit dem karosserieseitigen Scharnierteil 11 vorgesehen sein, um eine Verrastung in der geöffneten Stellung zu erzielen.

Die Schutzfunktion wird durch die Einrichtung, die einen Aufprall eines Körpers auf die Frontseite des Kraftfahrzeuges wahrnimmt, insbesondere durch den hierzu vorgesehenen Sensor ausgelöst. Das Ausgangssignal des elektrischen Sensors betätigt die Arretiereinrichtung 16, die daraufhin den scharnierachsenseitigen Teil des karosserieseitigen Scharnierteils 11 nicht mehr festhält, so dass die Feder 13 die Scharnierteile 10 und 11 auseinanderspreizen kann. Dadurch wird die Rückseite der Fronthaube um das Schloss als Drehpunkt nach oben geschwenkt, bewegt sich die Scharnierachse 12 nach oben, da sich der Winkel zwischen den Scharnierteilen 10 und 11 durch die Kraft der Feder 13 erhöht wird, und bewegt sich das Gleitstück 15 des karosserieseitigen Scharnierteils 11 nach hinten, um nicht zu verklemmen.

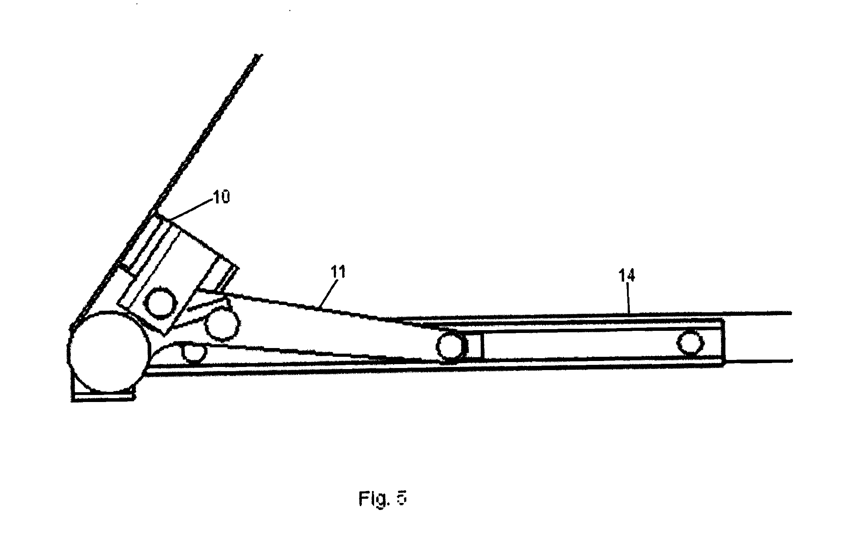

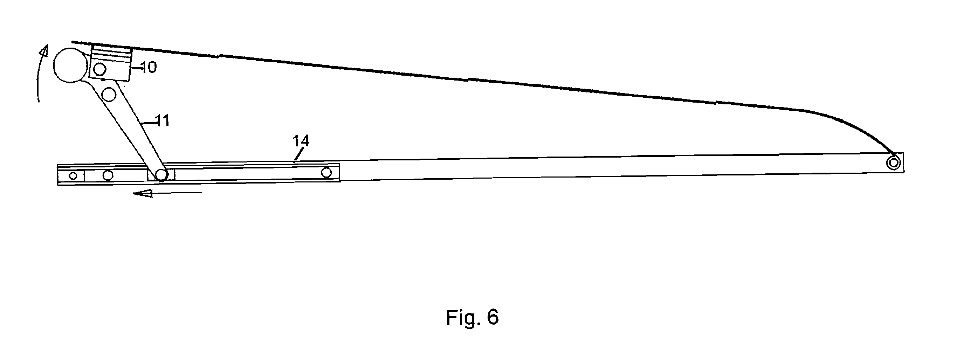

In den Fig. 5 und 6 ist der Zustand dargestellt, in dem die Fronthaube in üblicher Weise durch Schwenken am Scharnier geöffnet ist und in dem die Scharnierachse nach oben bewegt und die Rückseite der Fronthaube abgehoben ist.

Um die Vorrichtung wieder in die Normalstellung zurückzuführen, wird die Frontklappe am Schloss geöffnet, so dass der karosserieseitige Scharnierteil 11 in seiner Schiene 14 wieder nach vorne zurückrutschen kann. Gleichzeitig senkt sich der scharnierachsenseitige Teil des karosserieseitigen Scharnierteils 11 ab. Dann kann die Arretiereinrichtung 16 wieder geschlossen werden und kann der karosserieseitige Scharnierteil 11 wieder arretiert werden. Abschließend wird die Fronthaube wie im Normalbetrieb am Schloss geschlossen.

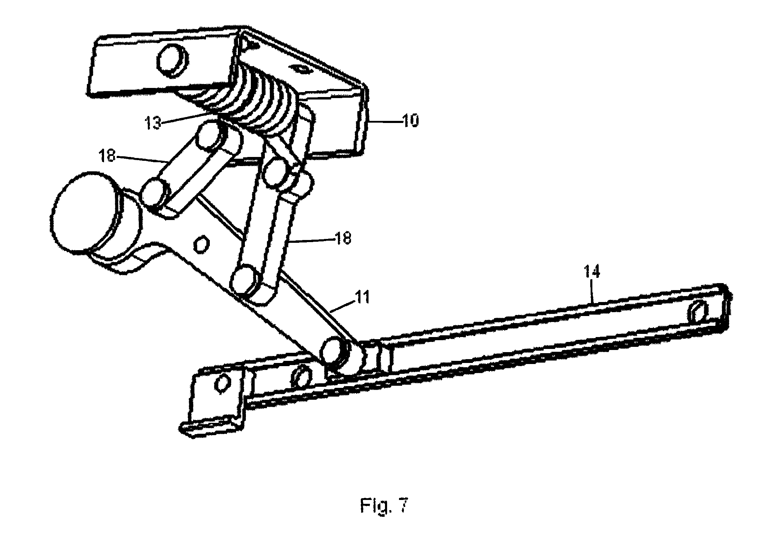

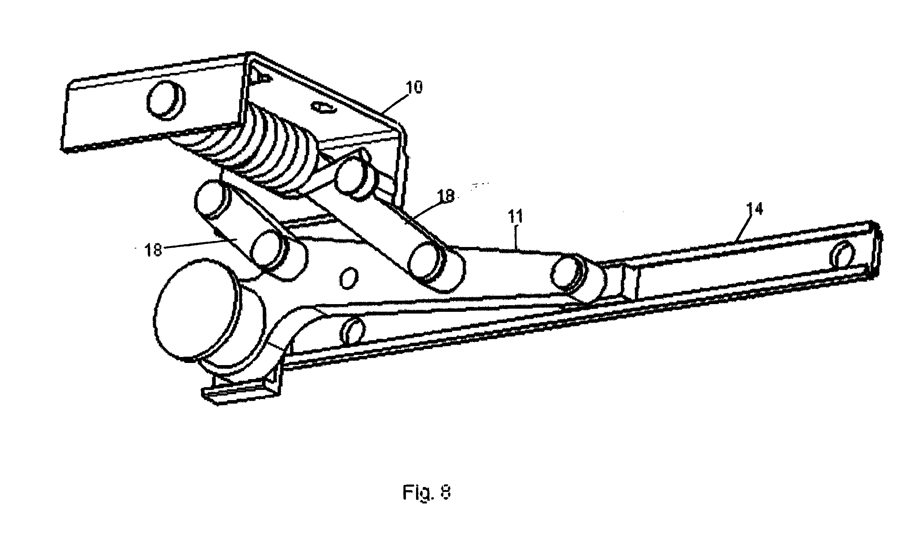

Die Fig. 7 und 8 zeigen ein Ausführungsbeispiel eines Aufprallschutzscharniers für ein zweites Ausfühirungsbeispiel der erfindungsgemäßen Aufprallschutzvorrichtung, das mehrgelenkig ausgebildet ist und zwei Gelenkarme 18 aufweist, über die der karosserieseitige Scharnierteil 11 mit dem fronthaubenseitigen Scharnierteil 10 verbunden ist. Die Feder 13 greift in diesem Fall mit einem Ende am fronthaubenseitigen Scharnierteil 10 und mit ihrem anderen E nde an einem der Gelenkarme 18 an, wie es in Fig. 7 und 8 jeweils dargestellt ist.

## Patentansprüche

1. Aufprallschutzvorrichtung für die Frontseite eines Kraftfahrzeuges, an der eine Fronthaube vorgesehen ist, die an der Rückseite über wenigstens ein Scharnier und an der Vorderseite über ein Schloss mit der Karosserie des Kraftfahrzeuges verbunden ist, wobei das wenigstens eine Scharnier einen frontseitigen und einen karosserieseitigen Scharnierteil (10, 11) aufweist, mit
- einer Einrichtung, die einen Aufprall eines Körpers auf die Frontseite des Kraftfahrzeuges wahrnimmt,
- einer Federeinrichtung (13), die die Rückseite der Fronthaube in Richtung auf eine gegenüber den benachbarten Teilen der Karosserie angehobene Stellung vorspannt, und
- einer Arretiereinrichtung (16, 17), die die Federeinrichtung (13) im vorgespannten Zustand arretiert und durch die Einrichtung ausgelöst wird, die einen Aufprall wahrnimmt, wobei
- die Fronthaube am Schloss schwenkbar ausgebildet ist,
- einer der Scharnierteile (10, 11) an seinem freien Ende schwenkbar und in Fahrzeuglängsrichtung verschiebbar angeordnet ist und
- die Federeinrichtung (13) zwischen den Scharnierteilen (10, 11) so angeordnet ist, dass sie beim Öffnen der Fronthaube die Öffnungsbewegung unterstützt und beim Auslösen der Arretiereinrichtung (16, 17) die Scharnierteile (10, 11) gegeneinander spreizt.

2. Vorrichtung nach Anspruch 1, **dadurch gekennzeichnet, dass** das freie Ende des Scharnierteils in einer Schiene (14) verschiebbar angeordnet ist, die fest mit der Karosserie des Kraftfahrzeuges verbunden ist.

3. Vorrichtung nach einem der Ansprüche 1 oder 2, **dadurch gekennzeichnet, dass** die Federeinrichtung (13) aus einer Schraubenfeder besteht, die auf der Scharnierachse (12) sitzt.

4. Vorrichtung nach einem der vorhergehenden Ansprüche, **dadurch gekennzeichnet, dass** die Einrichtung, die einen Aufprall eines Körpers auf die Frontseite des Kraftfahrzeuges wahrnimmt ein elektrischer Sensor ist, dessen elektrisches Ausgangssignal an einer elektrisch arbeitenden Auslöseeinrichtung liegt, die die Arretiereinrichtung auslöst.

5. Vorrichtung nach Anspruch 4, **dadurch gekennzeichnet, dass** die Arretiereinrichtung aus einem Arretierstift (17), der das karosserieseitige Scharnierteil (11) an der Karosserie festlegt, und einem Magneten (2) besteht, der den Arretierstift (17) in dieser Position hält, und dass die Auslöseeinrichtung aus einer um den Magneten (2) gewickelten Induktionsspule (4) und einer Rückstellfeder (3) besteht, die bei Erregung der Induktionsspule (4) den Arretierstift (17) gegen die Wirkung des Magneten (2) abzieht.

6. Vorrichtung nach einem der vorhergehenden Ansprüche, **dadurch gekennzeichnet, dass** das Scharnier mehrgelenkig ausgebildet ist.
